# EUROPEAN PATENT APPLICATION

(11) **EP 4 009 404 A1**
(43) Date of publication of application: **08.06.2022**
(21) Application number: 20846550.0
(22) Date of filing: 22.07.2020
(51) Int. Cl.: H01M 4/86, H01M 4/88, H01M 4/92, B01J 37/02, H01M 8/10, B01J 23/42

(54) **CATALYST LAYER FOR FUEL CELL, METHOD FOR PRODUCING SAME, AND FUEL CELL PROVIDED WITH SAME**

(30) Priority: 01.08.2019 JP 2019142584
(71) Applicant: Mitsui Mining & Smelting Co., Ltd., Shinagawa-ku Tokyo 141-8584 (JP)
(72) Inventor: KITABATAKE, Takuya, Ageo-shi, Saitama 362-0021 (JP); MIKI, Joji, Ageo-shi, Saitama 362-0021 (JP)
(74) Representative: Novagraaf Technologies
(86) International application number: PCT/JP2020/028538
(87) International publication number: WO 2021/020300

(57) **Abstract**

A catalyst layer for a fuel cell contains a support and a catalyst supported on the support. The support contains a titanium oxide having a crystal phase of Ti₂O. The ratio of total abundance of trivalent Ti and divalent Ti (W2) to abundance of tetravalent Ti (W1), W2/W1, is 0.1 or more as determined on the surface of the catalyst layer by X-ray photoelectron spectroscopy. The catalyst is preferably made of at least one metal selected from platinum, iridium, and ruthenium, or an alloy thereof. Also, the catalyst layer for a fuel cell preferably further contains an ionomer, and the ratio of mass of the ionomer (I) to mass of the catalyst-supporting support (S), I/S, is preferably 0.06 or more and 0.23 or less.

## Description

### Technical Field

The present invention relates to a catalyst layer for a fuel cell. The present invention also relates to a method for producing the catalyst layer for a fuel cell, and a fuel cell including the catalyst layer for a fuel cell.

### Background Art

The applicant of the present application previously proposed a catalyst on a titanium oxide-containing support, wherein the molar ratio between titanium element and oxygen element contained in the support, O/Ti, is 0.8 or more and 1.6 or less (see Patent Literature 1). This support has a crystal phase of TiO_{0.5} or a crystal phase of TiO. Advantageously, this support is highly conductive and thus the performance of the catalyst-supporting support is sufficiently delivered.

Patent Literature 2 also discloses a titanium oxide-containing support. Patent Literature 2 discloses a method for producing a catalyst layer for a fuel cell, the method including: mixing platinum supported on a titanium oxide support, an ionomer, water, and a tertiary alcohol; and pulverizing the mixture using dispersing media that has a Vickers hardness lower than that of titanium.

### Citation List

### Patent Literature

Patent Literature 1: WO 2019/003788A1
Patent Literature 2: US 2018/205092A1

### Summary of Invention

In the supports disclosed in Patent Literatures 1 and 2, the titanium oxide in the support contains titanium with a valence of less than four. Because of this, the oxidation of the titanium oxide may proceed to thereby produce titanium dioxide. Excessive production of titanium dioxide causes a reduction in the catalytic activity of the catalyst on the titanium oxide support.

Accordingly, it is an object of the present invention to provide a fuel cell catalyst in which a reduction in the catalytic activity is suppressed.

The inventors of the present invention have conducted in-depth investigations to solve the problem described above. As a result, they have found that a reduction in the catalytic activity can be suppressed by controlling the valence of titanium in the titanium oxide-containing support. The present invention has been made based on the finding.

Specifically, the present invention is intended to solve the problem described above by providing a catalyst layer for a fuel cell, the catalyst layer including a support and a catalyst supported on the support, wherein the support contains a titanium oxide having a crystal phase of Ti₂O, and a ratio of total abundance of trivalent Ti and divalent Ti (W2) to abundance of tetravalent Ti (W1), W2/W1, is 0.1 or more as determined on a surface of the catalyst layer by X-ray photoelectron spectroscopy.

Also, the present invention provides a solid polymer fuel cell including the catalyst layer for a fuel cell described above as an anode catalyst layer.

Furthermore, the present invention provides a method for producing a catalyst layer for a fuel cell including a support and a catalyst supported on the support, the method including the steps of:
causing a catalyst to be supported on a surface of a support containing a titanium oxide having a crystal phase of Ti₂O;
dispersing the support with the catalyst supported thereon and a solvent using a container-driven mill with dispersing media having a Vickers hardness of 1000 HV or more and 2500 HV or less to obtain a dispersion liquid; and
applying the dispersion liquid to an object to be applied and drying the dispersion liquid applied.

### Description of Embodiment

Hereinafter, the present invention will be described by way of preferred embodiments thereof. The present invention relates to a catalyst layer for a fuel cell. The catalyst layer for a fuel cell contains a catalyst-supporting support (in other words, a support with a catalyst), and that is, in the catalyst layer, a catalyst is supported on a support. The support contains a titanium oxide. The titanium oxide contains titanium element (Ti) and oxygen element (O), and preferably, the remainder is inevitable impurities. The support containing the titanium oxide is preferably conductive. The catalyst layer containing the catalyst-supporting support is used in electrodes of various types of fuel cells. For example, the catalyst layer is used as an anode catalyst layer and/or a cathode catalyst layer of a solid polymer fuel cell or a phosphoric acid fuel cell.

In the catalyst layer of the present invention, the titanium oxide contained in the support has a crystal phase of Ti₂O. The titanium oxide that has a crystal phase of Ti₂O is highly conductive, and thus the catalyst-supporting support containing such titanium oxide can deliver sufficient performance. Accordingly, the support containing such titanium oxide is preferably used as a catalyst support for a fuel cell. The fact that the support containing titanium oxide has a crystal phase of Ti₂O can be checked by X-ray diffractometry on the catalyst layer of the present invention.

It is preferable that the crystal phase of Ti₂O be present in the support as the main crystal phase. When the crystal phase of Ti₂O is contained as the main crystal phase, the support has further improved conductivity. The proportion of the crystal phase of Ti₂O to the support is preferably 30 mass% or more, and more preferably 50 mass% or more. A crystal phase or an amorphous phase of titanium oxide other than the crystal phase of Ti₂O may be present in the support. Examples of such titanium oxide include TiO, TiO₂, Ti₂O₃, and Ti₄O₇.

The crystal phase of the support is identified in the following manner: powder X-ray diffractometry is performed with CuKα1 rays in a range of 20° to 100° using, for example, Smart Lab available from Rigaku Corporation as the diffractometer, and the diffraction pattern obtained through the powder X-ray diffractometry is observed to identify the crystal phase.

Whether or not the support has a crystal phase of Ti₂O as the main crystal phase is determined by determining whether or not, in the diffraction pattern obtained through the powder X-ray diffractometry, the highest intensity of the intensities of the diffraction peaks assigned to the crystal phase of Ti₂O is higher than the highest intensity of the intensities of the diffraction peaks assigned to any other crystal phases. Also, the proportion, in terms of mass, of the crystal phase of Ti₂O to the support can be calculated using the ratio of the highest intensity of the intensities of the diffraction peaks assigned to the crystal phase of Ti₂O to the highest intensity of the intensities of the diffraction peaks assigned to any other crystal phases.

In the catalyst layer of the present invention, the valence of titanium contained in the support is controlled. Specifically, the support contains, as titanium, tetravalent titanium, trivalent titanium, divalent titanium, and monovalent titanium. Also, the valence of titanium that is present on the surface of the support and the valence of titanium that is present within the support are controlled. On the surface, trivalent titanium and divalent titanium are present in addition to tetravalent titanium because the surface is susceptible to oxidation.

In the catalyst layer of the present invention, the valence of titanium is controlled such that the ratio of total abundance of trivalent titanium and divalent titanium (W2) to abundance of tetravalent titanium (W1), W2/W1, is 0.1 or more as determined on the surface of the catalyst layer by X-ray photoelectron spectroscopy (hereinafter also referred to as "XPS"). Controlling the valence of titanium as described above means that the amount of TiO₂ present on the surface of the support having a crystal phase of Ti₂O is limited. Thus, a reduction in the conductivity of the support is suppressed, and the catalyst layer of the present invention can deliver sufficient performance. In view of more significantly delivering such an advantage, the ratio W2/W1 preferably is 0.2 or more. The upper limit of the ratio W2/W1 depends on the amount of TiO₂ that is present on the surface of the support. It is preferable that a small amount of TiO₂ be present on the surface of the support because the oxidation of Ti₂O that is present within the support is effectively suppressed. Likewise, when TiO is present in the support, the oxidation of TiO is also effectively suppressed due to the presence of a small amount of TiO₂ on the surface of the support. In view of these, the ratio W2/W1 is preferably 0.4 or less.

The ratio W2/W1 is controlled by, for example, the ratio I/S, the hardness and the diameter of dispersing media, the ratio B/S, and the type of solvent used for dispersing, which will be described later. The ratio I/S is the ratio of mass of an ionomer, I, to mass of the catalyst-supporting support (total mass of the catalyst and the support), S, and the ratio B/S is the ratio of mass of the dispersing media, B, to the mass of the catalyst-supporting support, S.

The ratio W2/W1 preferably satisfies the above-described value when the catalyst layer is alone. Alternatively or additionally, the ratio W2/W1 preferably satisfies the above-described value when the catalyst layer is included in a catalyst-coated membrane (hereinafter also referred to as "CCM") or a membrane electrode assembly. Furthermore, the ratio W2/W1 preferably satisfies the above-described value before and/or after the driving of a fuel cell that includes the catalyst layer.

W2 and W1 can be determined in the following manner. XPS is used for the determination. Analysis of the catalyst layer surface is performed using, for example, PHI Quantes available from ULVAC-PHI, Inc. as the X-ray photoelectron spectrometer.

Other conditions for the determination are as follows.
- Excitation X rays: monomer Al-Kα rays (1486.7 eV)
- Output: 100 W
- Accelerating voltage: 100 kV
- X-ray irradiation diameter: 100 µmϕ
- Area to be analyzed: 300 µm × 600 µm
- Pass energy: 26.0 eV
- Energy step: 0.1 eV/step

The valence of Ti on the surface of the catalyst layer was evaluated by separating the peaks of Ti⁴⁺, Ti³⁺, and Ti²⁺ in a corrected spectrum in which Ti2p_{3/2} peak top of Ti was adjusted to the energy position of Ti2p_{3/2} peak of Ti⁴⁺ (458.6 eV). The positions of Ti2p_{3/2} peak of Ti⁴⁺, Ti³⁺, and Ti²⁺ were considered as at 458.6 ± 0.2 eV, 453 ± 0.7 eV, and 455.7 ± 0.6 eV, respectively. The spectrum was approximated by a linear combination of Gaussian function and Lorentzian function in which the range of the positions of the peaks of Ti in each state was fixed, and the abundance of Ti of each valence was calculated from the obtained peak area ratio. That is, the abundance of tetravalent Ti, W1, was calculated from the proportion of the peak area of Ti⁴⁺ to the total peak area of Ti⁴⁺, Ti³⁺, and Ti²⁺ separated. Also, the total abundance of divalent Ti and trivalent Ti, W2, was calculated from the proportion of the total peak area of Ti³⁺ and Ti²⁺ to the total peak area of Ti⁴⁺, Ti³⁺, and Ti²⁺ separated. The term "abundance" used herein refers to the ratio in terms of the number of atoms.

For analysis of XPS data, data analysis software (Multi Pak Ver. 9 available from ULVAC-PHI, Inc.) was used. Iterated Shirley was used in background mode.

The catalyst layer of the present invention has a low volume resistivity because the support is highly conductive. Specifically, the support used in the catalyst layer of the present invention has a volume resistivity as low as 10 Ω·cm or less, particularly 5 Ω·cm or less, and especially 2 Ω·cm or less, before supporting the catalyst. Because the support having such a low volume resistivity as above supports the catalyst, the catalyst layer of the present invention is suitable for use in, for example, a solid polymer fuel cell or a phosphoric acid fuel cell used for an automobile fuel cell or a home fuel cell.

The volume resistivity is measured in the following manner. For the measurement, a powder resistivity measurement system (PD-41 available from Mitsubishi Chemical Analytech Co., Ltd.) and a resistivity meter (MCP-T600 available from Mitsubishi Chemical Analytech Co., Ltd.) are used. 1 g of a sample is placed in a probe cylinder, and the probe unit is set in PD-41. The resistance value when a load of 3.2 MPa is applied using a hydraulic jack is measured using the resistivity meter. The volume resistivity is calculated from the found resistance value and the thickness of the sample.

In the catalyst layer of the present invention, the particle size of the support with the catalyst (the whole of the support plus the catalyst) is preferably 0.01 µm or more and 10 µm or less, and more preferably 0.05 µm or more and 5 µm or less, wherein the particle size of the support with the catalyst is the 50th percentile of the particle size, D₅₀, on a volume basis obtained by a laser diffraction/scattering particle size distribution measurement method (for example, using a laser diffraction/scattering particle size distribution analyzer LA-920 available from Horiba Ltd.). When the support with the catalyst has a particle size within this range, the catalytic activity can be increased to a sufficiently high level. Unless otherwise stated, the term "D₅₀" used herein refers to the particle size measured in accordance with the above-described measurement method.

In the catalyst layer of the present invention, the amount of the catalyst supported is generally, but depending on the type of catalyst, preferably 1 mass% or more and 50 mass% or less, more preferably 5 mass% or more and 45 mass% or less, and even more preferably 15 mass% or more and 40 mass% or less, based on the total of the support and the catalyst. The catalyst supported in an amount within this range, which is a requisite minimum, can yet exhibit sufficient catalytic activity. The amount of the catalyst supported can be determined by dissolving the catalyst layer in, for example, an acid to prepare a solution, and subjecting the solution to ICP emission spectroscopy.

There is no particular limitation on the type of catalyst used in the present invention, and a substance that facilitates the chemical reaction of interest is appropriately used. The catalyst layer of the present invention is designed to be used as an electrode catalyst in a fuel cell, and accordingly, it is preferable to use a metal that facilitates an electrode reaction as the catalyst. For such a metal, it is preferable to use a noble metal catalyst selected from, for example, platinum, gold, palladium, silver, iridium, rhodium, and ruthenium. The metals listed above may also be used in the form of an alloy. In the case where a catalyst that has a hydrogen oxidation activity is used as the catalyst, it is preferable to use a catalyst that contains at least one metal selected from the group consisting of platinum, iridium, and ruthenium, or an alloy thereof. For example, it is preferable to use platinum, an alloy that contains platinum, iridium, an alloy that contains iridium, ruthenium, or an alloy that contains ruthenium. Specific examples include, but are not limited to, platinum, iridium, ruthenium, a platinum-iridium alloy, a platinum-ruthenium alloy, a platinum-iron alloy, and an iridium-ruthenium alloy. In particular, the catalyst is preferably made of platinum, or an alloy made of platinum and at least one selected from iridium and ruthenium. The catalyst may be partially oxidized in the environment of usage.

The catalyst layer of the present invention may contain other components in addition to the catalyst-supporting support. The catalyst layer can contain, for example, an ionomer. The ionomer is preferably proton-conductive. When the catalyst layer of the present invention contains an ionomer, the catalyst layer delivers further improved performance. As the ionomer, a polymer material having a structure in which a perfluoroether pendant side chain with a sulfonic acid group at a terminal thereof is bonded to a polytetrafluoroethylene backbone can be used, for example. Examples of such an ionomer include Nafion (registered trademark), Flemion (registered trademark), Aciplex (registered trademark), and Fumion F (registered trademark).

In the case where the catalyst layer of the present invention contains an ionomer, it is advantageous to adjust the amount of the ionomer and the amount of the catalyst-supporting support (total amount of the catalyst and the support), in view of improving the performance of the catalyst layer. For example, in view of sufficiently covering the catalyst and the catalyst-supporting support with the ionomer in the catalyst layer and easily adapting to changes in the relative humidity of the external environment, the ratio of mass of the ionomer (I) to mass of the catalyst-supporting support (S), I/S, is preferably 0.06 or more, and more preferably 0.07 or more. On the other hand, in view of suppressing an increase in the electric resistance due to an increase in the abundance of the ionomer, as well as in view of easily adjusting the ratio W2/W1 to a desired value, the ratio I/S is preferably 0.23 or less, more preferably 0.22 or less, and even more preferably 0.20 or less. The ionomer is often supplied in the form of a dispersion liquid, and the term "mass of the ionomer (I)" refers to the mass of solids in the dispersion liquid.

Next, a method for producing a catalyst layer according to the present invention will be described. First, a method for producing a support used in the catalyst layer will be described. To produce the support, metallic titanium and TiO₂ are used as starting materials. As metallic titanium, a metallic titanium powder with a particle size D₅₀ of 0.5 µm or more and 300 µm or less is preferably used, in view of enhancing the reactivity between metallic titanium and TiO₂. From the same viewpoint, a TiO₂ powder with a particle size D₅₀ of 0.01 µm or more and 5.0 µm or less is preferably used as TiO₂. As TiO₂, any of rutile TiO₂, anatase TiO₂, and brookite TiO₂ can be used. In view of obtaining a support having a high specific surface area, it is preferable to use anatase TiO₂.

In the production of the support, the mixing ratio between metallic titanium and TiO₂ is adjusted as appropriate so as to produce a titanium oxide represented by Ti₂O. In view of this, TiO₂ is mixed in an amount of preferably 20 parts by mass or more and 300 parts by mass or less, more preferably 40 parts by mass or more and 230 parts by mass or less, and even more preferably 50 parts by mass or more and 180 parts by mass or less, with 100 parts by mass of metallic titanium. For mixing, an ordinary dry mixing apparatus can be used such as a mortar, an automatic mortar, a ball mill, a stamp mill, a V-type mixer, or a tumbler mixer.

After metallic titanium and TiO₂ have been mixed, the mixture is heated to produce a titanium oxide. In general, heating can be performed in a vacuum. In this case, the degree of vacuum, in absolute pressure, is preferably 1×10⁻¹ Pa or less, in view of successfully obtaining an intended titanium oxide. From the same viewpoint, the heating temperature is preferably 600°C or more and 1300°C or less, and more preferably 750°C or more and 1100°C or less. The heating time is preferably 5 hours or more and 30 hours or less, and more preferably 5 hours or more and 15 hours or less, when the heating temperature is within the above-described range.

Through the process described above, a support containing a titanium oxide having a crystal phase of Ti₂O can be obtained. Next, a catalyst is supported on the support to obtain the catalyst-supporting support. Prior to supporting the catalyst, it is preferable to adjust the particle size of the support. To adjust the particle size, an apparatus for pulverization such as a paint shaker or a bead mill can be used, for example. In this case, the support is preferably pulverized in an organic solvent in view of preventing the support from coming into contact with oxygen and being oxidized. Examples of the organic solvent used for this purpose include: aliphatic monohydric alcohols such as ethanol, 2-propanol, and butanol; aromatic hydrocarbons such as toluene and benzene; aliphatic hydrocarbons such as hexane; ketones; esters; and ethers. In view of successfully pulverizing the support, the amount of the organic solvent used is preferably 100 parts by mass or more and 9900 parts by mass or less, and more preferably 100 parts by mass or more and 900 parts by mass or less, per 100 parts by mass of the support.

After the support has been pulverized in the organic solvent, the step of supporting a catalyst is performed. At that time, it is preferable to keep the catalyst from coming into contact with oxygen as much as possible during the period from the completion of pulverization to supporting the catalyst, in view of preventing the support from being oxidized. For this purpose, it is advantageous that the catalyst be supported on the support dispersed in the organic solvent, without subjecting the pulverized support to drying/powdering. That is, advantageously, the support is pulverized in the organic solvent, and then the resulting support is used, without drying/powdering, to support the catalyst-supporting support in the organic solvent. The organic solvent used to pulverize the support and the organic solvent used to support the catalyst-supporting support may be the same or different.

To support the catalyst, a material containing an element for making the catalyst can be used. The material is mixed with the support dispersed in the organic solvent to allow the element for making the catalyst to attach to the surface of the support. At that time, the dispersion liquid may be heated, where necessary. Examples of the material containing an element for making a catalyst that contains platinum include hexachloroplatinate salt, dinitrodianmineplatinum salt, hexaanminplatinum chloride, tetraammineplatinum hydroxide, and acetylacetonato platinum salt. Examples of the material containing an element for making a catalyst that contains iridium include iridium oxide, iridium chloride, and acetylacetonato iridium salt. Examples of the material containing an element for making a catalyst that contains ruthenium include ruthenium chloride, ruthenium oxide, ruthenium nitrate, hexaanminruthenium chloride, and acetylacetonato ruthenium salt.

After the element for making a catalyst has been supported on the support through the process described above, the resultant is subjected to a heating step to produce the catalyst on the surface of the support. In general, heating can be performed in a reductive atmosphere. As the reductive atmosphere, it is preferable to use a mixed gas of hydrogen gas and an inert gas such as argon gas or nitrogen gas. In this case, the degree of reduction can be controlled by adjusting the ratio between hydrogen gas and the inert gas in the mixed gas. In view of appropriately controlling the degree of reduction, the heating temperature is preferably 400°C or more and 1200°C or less, and more preferably 550°C or more and 900°C or less. The heating time is preferably 0.1 hours or more and 20 hours or less, and more preferably 1 hour or more and 10 hours or less, when the heating temperature is within the above-described range.

In the manner described above, the catalyst-supporting support can be obtained that is a catalyst supported on the surface of a support containing a titanium oxide having a crystal phase of Ti₂O. Next, a dispersion liquid that contains the catalyst-supporting support is prepared. For preparation of the dispersion liquid, the catalyst-supporting support is mixed with a solvent. In the mixing step, an ionomer may be added, where necessary. As the solvent, it is preferable to use a primary alcohol, which will be described later. Other organic solvents may also be used, including aliphatic monohydric alcohols such as 2-propanol, aromatic hydrocarbons such as toluene and benzene, aliphatic hydrocarbons such as hexane, ketones, esters, and ethers. For mixing the solvent and the catalyst-supporting support, a container-driven mill with dispersing media is used.

Dispersing using a container-driven mill is preferably performed such that the oxidation of Ti₂O in the support contained in the catalyst-supporting support is prevented from proceeding as much as possible. From this viewpoint, it is preferable to appropriately select the hardness of the material of the dispersing media. The reason is as follows. Among various types of titanium oxides, Ti₂O has a high atomic ratio of titanium element to oxygen element. Thus, Ti₂O exhibits metallic properties stronger than other titanium oxides such as TiO₂, and has a high hardness. Accordingly, if dispersing media that has a low hardness is used for dispersing, it takes time to disperse, and thus the oxidation of Ti₂O unintentionally proceeds. Also, the dispersing media may be broken by the catalyst-supporting support having a high hardness, resulting in a contaminated dispersion liquid. In the production method of the present invention, for the purpose of completion of dispersing in a short time, dispersing media that has a high hardness is used to prevent the oxidation of Ti₂O from proceeding as much as possible, or in other words, to prevent the formation of tetravalent titanium on the surface of the support as much as possible. In view of this and also of easily satisfying a desired value of the ratio W2/W1 in a catalyst layer to be obtained, it is preferably to use dispersing media made of a material having a Vickers hardness of 1000 HV or more and 2500 HV or less, more preferably 1000 HVa or more and 2000 HV or less, and even more preferably 1200 HV or more and 1600 HV or less. Examples of such a material include alumina, yttrium-stabilized zirconia, and silicon nitride.

In view of preventing the oxidation of Ti₂O contained in the support as much as possible, it is preferable to use a primary alcohol as the solvent for dispersing. A primary alcohol is likely to undergo self-oxidation and reduce other substances, and thus, when a primary alcohol is present in the dispersion liquid, the oxidation of Ti₂O is unlikely to proceed.

As the primary alcohol, a primary alcohol having 1 or more and 10 or less carbon atoms may be used. In view of further preventing the oxidation of Ti₂O from proceeding, it is preferable to use a saturated aliphatic alcohol. Examples thereof include methanol, ethanol, propanol, butanol, pentanol, hexanol, heptanol, octanol, nonanol, and decanol. In particular, it is preferable to use a saturated aliphatic alcohol having 1 or more and 4 or less carbon atoms. The primary alcohols may be used singly or in combinations of two or more thereof. As the solvent used for dispersing, only a primary alcohol may be used, or a primary alcohol and another solvent such as water may be used.

In view of preventing the oxidation of Ti₂O contained in the support as much as possible, and also in view of easily satisfying a desired value of the ratio W2/W1 in a catalyst layer to be obtained, the content of the primary alcohol in the solvent is preferably 30 mass% or more, and more preferably 50 mass% or more.

Dispersing using a container-driven mill is preferably performed under a condition that the ratio of mass of the dispersing media (B) to mass of the catalyst-supporting support (S), B/S, is 1.5 or more and 5 or less, more preferably 2 or more and 4 or less, and even more preferably 2 or more and 3.5 or less, in view of making the collision energy applied during dispersing as small as possible in order to prevent the oxidation of Ti₂O as much as possible, and also in view of easily satisfying a desired value of the ratio W2/W1 in a catalyst layer to be obtained.

When dispersing using a container-driven mill, it is also advantageous to make the collision energy applied during dispersing as small as possible by appropriately selecting the size of the dispersing media, in view of preventing the oxidation of Ti₂O contained in the support, and also in view of easily satisfying a desired value of the ratio W2/W1 in a catalyst layer to be obtained. From the same viewpoint, the dispersing media are preferably in the shape of a sphere. In this case, the sphere has a diameter of, preferably 0.1 mm or more and 8 mm or less, more preferably 0.5 mm or more and 5 mm or less, and even more preferably 1 mm or more and 3 mm or less.

After the dispersion liquid of the catalyst-supporting support is obtained in the manner described above, a catalyst layer is formed from the dispersion liquid. The catalyst layer is formed by, for example, applying the dispersion liquid to an object to be applied (substrate) using any type of coater to form a coating film, and drying the coating film. As the object to be applied, a film of fluorine resin such as polytetrafluoroethylene can be used, for example. The catalyst layer formed on the object to be applied is overlaid on, for example, a solid electrolyte membrane and then heat-pressed to transfer the catalyst layer onto the surface of the solid electrolyte membrane. As a result of the transfer, a CCM including the solid electrolyte membrane and the catalyst layer disposed on one side of the solid electrolyte membrane is obtained.

The catalyst layer of the present invention formed in the manner described above is used as an electrode catalyst layer of a solid polymer fuel cell. In particular, the catalyst layer of the present invention is preferably used as an anode catalyst layer because it has a high catalytic activity. In particular, the anode preferably contains the catalyst layer of the present invention and a gas diffusion layer. The gas diffusion layer functions as a supporting current collector that has a current collecting function, and furthermore functions to sufficiently supply a gas to the catalyst layer of the present invention. As the gas diffusion layer, any of gas diffusion layers that are conventionally used in this technical field can be used. For example, a porous material such as carbon paper or carbon cloth can be used. A specific example is a carbon cloth obtained by weaving a thread that is made of a carbon fiber with its surface coated with polytetrafluoroethylene and a carbon fiber without the coating at a predetermined ratio.

As the solid polymer electrolyte, any of solid polymer electrolytes that are conventionally used in this technical field can be used. Examples thereof include a proton conductive membrane based on perfluorosulfonic acid polymer, a hydrocarbon polymer compound doped with an inorganic acid such as phosphoric acid, an organic/inorganic hybrid polymer a portion of which is substituted with a proton conductive functional group, and a proton conductor obtained by impregnating a polymer matrix with a phosphoric acid solution or a sulfuric acid solution.

A separator is placed on each side of the membrane electrode assembly including the catalyst layer of the present invention, a solid electrolyte membrane, and a gas diffusion layer, to thereby obtain a solid polymer fuel cell. As the separator, it is possible to use, for example, a separator that has a plurality of unidirectionally extending protrusions (ribs) at regular intervals on a side of the separator, the side being to face the gas diffusion layer. A groove having a rectangular cross section is formed between each pair of adjacent protrusions. The grooves serve as flow paths for supplying/discharging a fuel gas and an oxidant gas such as air. The fuel gas and the oxidant gas are supplied from a fuel gas supplying means and an oxidant gas supplying means, respectively. The separators are preferably disposed on the sides of the membrane electrode assembly such that the grooves formed in one separator and those in the other separator intersect each other at the right angle. The structural element described above is a minimum unit of a fuel cell, and several tens or several hundreds of the structural elements can be arranged in parallel to compose a cell stack as a fuel cell.

### Examples

Hereinafter, the present invention will be described in further detail by way of examples. However, the scope of the present invention is not limited to the examples given below. Unless otherwise stated, the percent sign "%" used hereinbelow means "mass%".

### Example 1

### (1) Step of producing support

6.7 g of metallic titanium and 3.7 g of anatase TiO₂ were mixed, and the mixture was heated in a vacuum furnace at 900°C for 10 hours. The absolute pressure in the vacuum furnace was set to 10⁻¹ Pa or less. The particle size D₅₀ of metallic titanium was 13 µm. The particle size D₅₀ of TiO₂ was 0.2 µm. Through heating as described above, a support made of a titanium oxide was obtained.

### (2) Step of supporting catalyst

4.0 g of the titanium oxide obtained in the step (1) and 16.0 g of ethanol were mixed. The resulting slurry was placed in a paint shaker, and the titanium oxide was pulverized for 10 hours. Next, without the resulting titanium oxide being dried/powdered or brought into contact with oxygen, 300 g of ethanol and 8 ml of an aqueous nitric acid solution of dinitroanmineplatinum (platinum concentration: 15%) were added to the slurry containing the titanium oxide, to thereby obtain a mixed solution. The mixed solution was placed in a four-necked flask. The mixed solution contained in the flask was heated in an oil bath for 6 hours such that the temperature of the mixed solution was 75°C. After that, the mixed solution was cooled and then washed with water to remove ethanol and byproducts (salt components). The cake obtained in this manner was vacuum-dried to obtain a dry powder.

### (3) Heating step

The dry powder obtained in the step (2) was heated. Heating was performed in an atmosphere of a mixed gas consisting of 2 vol% of H₂ and the remaining amount of Ar. The heating temperature was 600°C, and the heating time was two hours. In this way, a platinum catalyst-supporting support was obtained. The particle size D₅₀ of the support with the catalyst (the whole of the support plus the catalyst) was 0.37 µm. The particle size D₅₀ was measured using the method described hereinabove after the particles of the platinum catalyst-supporting support were mixed with ethanol and dispersed therein using an ordinary ultrasonic bath for one minute. The platinum catalyst-supporting support was subjected to X-ray diffractometry. As a result, a crystal phase of Ti₂O, a crystal phase of TiO, and a crystal phase of TiO₂ were observed, and the main crystal phase was found to be Ti₂O.

### (4) Dispersing step

The platinum catalyst-supporting support and yttrium-stabilized zirconia beads with a diameter of 1 mm (Vickers hardness: 1200 HV) were placed in a container, and then pure water, ethanol, and 2-propanol as solvents were sequentially added thereto at the mass ratio of 15:50:35. The mixed solution obtained in this manner was dispersed by ultrasonication for three minutes. Next, the mixed solution was stirred in a planetary ball mill (ARE 310 available from Thinky Corporation) at 800 rpm for 20 minutes. Furthermore, 5%Nafion (registered trademark) (274704-100ML available from Sigma-Aldrich) as an ionomer was added to the mixed solution, and the resulting mixed solution was stirred in the same manner as described above using ultrasonication and a planetary ball mill. The ratio of mass of the ionomer (I) to mass of the platinum catalyst-supporting support (S), I/S, and the ratio of mass of the beads (B) to mass S of the platinum catalyst-supporting support (S), B/S, were set to the values shown in Table 1 given below. Thus, a dispersion liquid was obtained. The amount of the catalyst supported in this state was 35% based on the total of the platinum catalyst and the support.

### (5) Step of forming catalyst layer

The dispersion liquid obtained in the step (4) was applied to a polytetrafluoroethylene sheet using a bar coater, and the coating film was dried at 60°C to thereby obtain a catalyst layer. The catalyst layer was subjected to X-ray diffractometry, and the main crystal phase in the support was found to be Ti₂O (the proportion of Ti₂O in the support was 62%).

### Examples 2 to 6 and Comparative Examples 1 to 5

Catalyst layers were obtained in the same manner as in Example 1, except that the conditions for the dispersion step (4) were changed as shown in Table 1 given below. In Comparative Example 2, diacetone alcohol was used instead of ethanol as a solvent.

### Measurement of W1 and W2

For each of the catalyst layers obtained in Examples and Comparative Examples, the ratio of total abundance of trivalent Ti and divalent Ti (W2) to abundance of tetravalent Ti (W1), W2/W1, was determined using XPS. The results are shown in Table 1 given below. W1 and W2 were measured using the above-described method.

### Production of fuel cells

Solid polymer fuel cells were produced using the catalyst layers obtained in Examples and Comparative Examples. Specifically, each of the catalyst layers obtained in Examples and Comparative Examples was used as an anode catalyst layer. A cathode catalyst layer was obtained in the following manner. 1.00 g of platinum on carbon black (TEC10E50E available from Tanaka Kikinzoku Kogyo) and yttrium-stabilized zirconia beads with a diameter of 10 mm were placed in a container, and then pure water, ethanol, and 2-propanol were sequentially added thereto at the mass ratio of 45:35:20 (10.2 g of a mixed solution). The resulting mixed solution obtained in the manner described above was dispersed by ultrasonication for three minutes. Next, the mixed solution was stirred in a planetary ball mill (ARE310 available from Thinky Corporation) at 800 rpm for 20 minutes. Furthermore, 5%Nafion (registered trademark) (274704-100ML available from Sigma-Aldrich) as an ionomer was added to the mixed solution, and the resulting mixed solution was stirred in the same manner as described above using ultrasonicatioin and a planetary ball mill. The amount of Nafion added was such that the mass ratio of Nafion to the platinum on carbon black was 70.0. The dispersion liquid thus obtained was applied to a polytetrafluoroethylene sheet using a bar coater, and the coating film was dried at 60°C.

The anode catalyst layer and the cathode catalyst layer formed on the polytetrafluoroethylene sheet were each cut into 54 mm × 54 mm squares, and were overlaid on each other with a Nafion (registered trademark) (NRE-212 available from Du-Pont Co. Ltd.) electrolyte membrane interposed therebetween. The resultant was then heat-pressed in the air at 140°C and 25 kgf/cm² for two minutes to transfer the catalyst layers. In this way, the cathode catalyst layer and the anode catalyst layer were respectively formed on the sides of a solid polymer electrolyte membrane made of Nafion, to thereby obtain a CCM.

The obtained CCM was sandwiched between a pair of gas diffusion layers (model number: 22BB available from SGL Carbon LLC). Furthermore, the resultant was further sandwiched between a pair of carbon plates having gas flow paths, to thereby prepare a solid polymer fuel cell. The fuel cell thus obtained corresponds to a JARI standard cell.

### Measurement of cell voltage

Hydrogen gas was supplied to the anode side of a solid polymer fuel cell, and oxygen gas was supplied to the cathode side of the solid polymer fuel cell. The flow rate was set such that the hydrogen gas utilization rate and the oxygen utilization rate were 70% and 40%, respectively. The hydrogen gas and the oxygen gas were humidified using an external humidifier and thereafter supplied to the fuel cell. Also, temperature adjustment was performed such that the temperature of the fuel cell was 80°C, and the humidity of the supplied gas was adjusted such that the relative humidity was 100%RH. The relationship between the cell voltage and the current density under these conditions was determined. From the obtained relationship between the cell voltage and the current density, the values of the cell voltage (V) at 0.2 A/cm² and 1.5 A/cm² were obtained. The results are shown in Table 1 given below. A current density of 0.2 A/cm² is suitable for evaluation of the catalytic activity. A current density of 1.5 A/cm² is suitable for evaluation of the cell resistance.

**[Table 1]**

| | Dispersing media | | | Ionomer, I/ catalyst on support, S | Solvent | Catalyst layer | Cell voltage (V) | |
|---|---|---|---|---|---|---|---|---|
| | Type | Diameter (mm) | Dispersing media, B / catalyst on support, S | | | Ratio for valence of Ti on surface W2/W1 | 0.2 A/cm² | 1.5 A/cm² |
| Example 1 | ZrO₂ | 1 | 2.12 | 0.08 | Pure water Ethanol 2-propanol | 0.24 | 0.771 | 0.599 |
| Example 2 | ZrO₂ | 1 | 2.04 | 0.15 | Pure water Ethanol 2-propanol | 0.20 | 0.770 | 0.593 |
| Example 3 | ZrO₂ | 3 | 2.17 | 0.07 | Pure water Ethanol 2-propanol | 0.16 | 0.771 | 0.576 |
| Example 4 | ZrO₂ | 3 | 3.54 | 0.07 | Pure water Ethanol 2-propanol | 0.14 | 0.769 | 0.564 |
| Example 5 | ZrO₂ | 8 | 2.01 | 0.07 | Pure water Ethanol 2-propanol | 0.12 | 0.766 | 0.560 |
| Example 6 | ZrO₂ | 1 | 2.08 | 0.20 | Pure water Ethanol 2-propanol | 0.12 | 0.766 | 0.562 |
| Comparative Example 1 | ZrO₂ | 1 | 21.29 | 0.07 | Pure water Ethanol 2-propanol | 0.07 | 0.743 | 0.506 |
| Comparative Example 2 | ZrO₂ | 1 | 2.09 | 0.13 | Pure water Diacetone alcohol 2-propanol | 0.04 | 0.756 | 0.496 |
| Comparative Example 3 | ZrO₂ | 10 | 21.58 | 0.07 | Pure water Ethanol 2-propanol | 0.08 | 0.756 | 0.543 |
| Comparative Example 4 | ZrO₂ | 3 | 10.40 | 0.08 | Pure water Ethanol 2-propanol | 0.08 | 0.756 | 0.541 |
| Comparative Example 5 | ZrO₂ | 1 | 2.09 | 0.25 | Pure water Ethanol 2-propanol | 0.07 | 0.752 | 0.522 |

As is clear from the results shown in Table 1, the fuel cells that include the catalyst layers obtained in Examples achieve cell voltage values higher than those of the fuel cells that include the catalyst layers obtained in Comparative Examples. This means the following: by the catalyst layers obtained in Examples, a reduction in the catalytic activity was suppressed to maintain the catalytic activity at a high level and an increase in the cell resistance was suppressed to improve cell characteristics, as compared with the catalyst layers obtained in Comparative Examples,

### Industrial Applicability

According to the present invention, there is provided a catalyst layer for a fuel cell in which a reduction in catalytic activity is suppressed, as described in detail above. Also, in a fuel cell that includes the catalyst layer of the present invention, an increase in cell resistance is suppressed.

## Claims

1. A catalyst layer for a fuel cell, comprising a catalyst-supporting support which includes a support and a catalyst supported on the support, wherein the support contains a titanium oxide having a crystal phase of Ti₂O, and a ratio of total abundance of trivalent Ti and divalent Ti (W2) to abundance of tetravalent Ti (W1), W2/W1, is 0.1 or more as determined on a surface of the catalyst layer by X-ray photoelectron spectroscopy.

2. The catalyst layer for a fuel cell according to claim 1, wherein the catalyst comprises at least one metal selected from platinum, iridium, and ruthenium, or an alloy thereof.

3. The catalyst layer for a fuel cell according to claim 1 or 2, further comprising: an ionomer, wherein a ratio of mass of the ionomer (I) to mass of the catalyst-supporting support (S), I/S, is 0.06 or more and 0.23 or less.

4. A solid polymer fuel cell comprising: the catalyst layer for a fuel cell according to any one of claims 1 to 3 as an anode catalyst layer.

5. A method for producing a catalyst layer for a fuel cell comprising a support and a catalyst supported on the support, the method comprising the steps of: causing a catalyst to be supported on a surface of a support containing a titanium oxide having a crystal phase of Ti₂O; dispersing the support with the catalyst supported thereon and a solvent using a container-driven mill with dispersing media having a Vickers hardness of 1000 HV or more and 2500 HV or less to obtain a dispersion liquid; and applying the dispersion liquid to an object to be applied and drying the dispersion liquid applied.

6. The method according to claim 5, wherein the solvent comprises a primary alcohol.

7. The method according to claim 5 or 6, wherein the dispersing media have a diameter of 0.1 mm or more and 8 mm or less.

8. The method according to any one of claims 5 to 7, wherein the dispersing media are spherical in shape.

9. The method according to any one of claims 5 to 8, wherein in the dispersing step, a ratio of mass of the dispersing media (B) to mass of the catalyst-supporting support (S), B/S, is 1.5 or more and 10 or less.
